# EUROPÄISCHE PATENTSCHRIFT

(11) **EP 2 766 977 B1**
(45) Veröffentlichungstag und Bekanntmachung des Hinweises auf die Patenterteilung: **27.04.2016**
(21) Anmeldenummer: 12787639.9
(22) Anmeldetag: 12.10.2012
(51) Int. Cl.: H02K 11/00, H02K 5/08, H02K 5/22, H02K 7/116

(54) **STELLANTRIEB**
ACTUATING DRIVE
MÉCANISME DE COMMANDE

(30) Priorität: 12.10.2011 DE 102011084341
(43) Veröffentlichungstag der Anmeldung: 20.08.2014
(73) Patentinhaber: Bühler Motor GmbH, 90459 Nürnberg (DE)
(72) Erfinder: PETERREINS, Thomas, 90491 Nürnberg (DE); SACHNOV, Wjatscheslav, 90518 Altdorf (DE)
(86) Internationale Anmeldenummer: PCT/DE2012/200068
(87) Internationale Veröffentlichungsnummer: WO 2013/053357

(56) Entgegenhaltungen:
- EP-A1- 0 655 822
- EP-A1- 1 191 210
- EP-A1- 1 397 853
- WO-A1-2010/029054
- WO-A2-2006/069564
- DE-A1- 10 101 608

## Beschreibung

Die Erfindung betrifft einen Stellantrieb mit einem Gehäuse, das Aufnahmen für ein Untersetzungsgetriebe und für einen Elektrokleinstmotor umfasst, wobei die Motoraufnahme mit einem Anschlussdeckel verbunden ist.

Aus der US 2011/0166512 A1 ist ein gattungsgemäßer Stellantrieb bekannt, welcher als Antrieb für einen Kolben eines Medikamentenverabreichungsgeräts dient, womit eine langsame, fein dosierte Medikamentenabgabe vorgenommen wird. Die Aufnahme für den Elektrokleinstmotor ist hier durch eine Schnappverbindung gelöst, die zwischen dem Anschlussdeckel und dem Gehäuse hergestellt ist. Diese Schnappverbindung bedarf einer sehr engen Tolerierung, um ein Spiel zwischen dem Elektrokleinstmotor und dem Gehäuse zu begrenzen. Da das Untersetzungsgetriebe aufgrund der geringen Baugröße und des hohen Untersetzungsverhältnisses mit einer sehr feinen Verzahnung versehen ist und der Elektrokleinstmotor als Massenartikel mit einer relativ großen äußeren Maßtoleranz behaftet ist, kann die Verzahnung des Untersetzungsgetriebes zwischen einem Motorritzel und einem Getrieberad bei ungünstiger Teilekombination außer Eingriff geraten und das Gerät somit unbrauchbar sein.

EP 1 191 210 A1 offenbart einen Stellantrieb mit einem umspritzten Leitblech.

Aufgabe der vorliegenden Erfindung ist es daher, bei einem gattungsgemäßen Stellantrieb für eine sichere spielfreie Aufnahme des Elektrokleinstmotors, sowie eine einfache Montage und Herstellbarkeit der verwendeten Teile bei hoher Wirtschaftlichkeit zu sorgen.

Diese Aufgabe wird erfindungsgemäß durch das Kennzeichen des Anspruchs 1 gelöst. Die Motorkontaktbereiche des Anschlussdeckels dienen zur sicheren und einfachen Kontaktierung von Anschlussfahnen des Elektrokleinstmotors, welche sich achsparallel aus dessen Stirnseite erstrecken. Die Haltebereiche des Leitblechs dienen dazu, sich mit Gehäuseanformungen des Gehäuses zu verkrallen. Die Lage des Anschlussdeckels relativ zum Gehäuse ist dabei lediglich von der Motorlänge abhängig. Die Aufnahme des Elektrokleinstmotors im Gehäuse erfolgt auch bei unterschiedlicher Motorlänge stets spielfrei, weil der Anschlussdeckel bei der Montage auf Anschlag montiert wird. Dieser Vorgang lässt sich einfach automatisieren. Hierdurch lassen sich Motoren aus der Massenproduktion verwenden, die eine hohe Wirtschaftlichkeit erlauben.

Weiterbildungen der Erfindung werden anhand der Unteransprüche dargestellt. Es ist vorgesehen, dass die Fügerichtung des Leitblechs in Bezug auf die Anschlussfahnen parallel zur Fügerichtung des Leitblechs in Bezug auf die Gehäuseanformungen ist. Hierdurch können in einem Arbeitsgang und mit einer Fügebewegung die elektrische Verbindung des Elektrokleinstmotors als auch die mechanische Verbindung des Anschlussdeckels mit dem Gehäuse des Stellantriebs und damit die mechanische Befestigung des Elektrokleinstmotors hergestellt werden.

Um auch eine radiale Festsetzung des Elektrokleinstmotors im Gehäuse zu erzielen sind Schaberippen in der Aufnahme des Gehäuses vorgesehen, welche den Elektrokleinstmotor radial spielfrei halten, die aber bei dessen Übermaß auch abgeschabt oder deformiert werden können.

In einer besonders bevorzugten Weiterbildung der Erfindung ist vorgesehen, dass die Gehäuseanformungen in Form von schmalen Zungen an die Aufnahme für den Elektrokleinstmotor anschließen und im montierten Zustand auch an der Toleranzobergrenze für die Gehäuselänge des Elektrokleinstmotors über den Anschlussdeckel vorspringen. Hierdurch kann der Elektrokleinstmotor durch den Anschlussdeckel über einen großen Toleranzbereich axial spielfrei und sicher in der Aufnahme gehalten werden.

Vorteilhafterweise sollen die Kontakte des Anschlussdeckels in Form von federnden Kontaktarmen ausgebildet sein, wodurch eine einfache Montage gewährleistet ist und ein gewisser Toleranzausgleich erreicht wird.

Damit diese Kontakte nicht im Produktionsprozess verbogen werden, sind an dem Kunststoffmaterial, das um das Leitblech gespritzt ist, Schutzeinrichtungen vorgesehen, welche beiderseits der Kontaktarme angeordnet sind. Die Kontaktarme erstrecken sich dabei im Wesentlichen radial zur Motorachse aus dem Anschlussdeckel; das gleiche gilt auch für die Schutzeinrichtungen, die plattenartig jeweils an den Enden des Anschlussdeckels beiderseits der Kontaktarme angeordnet sind und eine zusätzliche Schutzeinrichtung, die parallel zu den äußeren Schutzeinrichtungen zwischen den Kontaktarmen angeordnet ist.

Eine besonders bevorzugte Weiterbildung der Erfindung wird durch Vorsprünge dargestellt, welche nahe der Haltebereiche als Abstandhalter für die Gehäuseanformungen des Gehäuses dienen. Die Gehäuseanformungen neigen sich tendenziell leicht nach innen zum Elektrokleinstmotor hin, so dass sie sich nicht in der optimalen Position bezüglich der Haltebereiche befinden. Die Haltebereiche sind Blechlaschen, die Bestandteil des umspritzten Leitblechs sind; sie bestehen jeweils aus zwei sich gegenüberstehenden Blechlaschen, die leicht schräggestellt sind, um einerseits das Fügen auf die Gehäuseanformungen zu erleichtern und andererseits das Lösen von diesen zu verhindern. Die Blechlaschen sind im Berührungsbereich mit den Gehäusanformungen leicht konkav ausgebildet, so dass sie an die leicht konvex gestalteten Gehäuseanformungen angepasst sind. Diese Formgebung ergibt, dass die radiale Lage der Gehäuseanformungen ein Optimum hat, welches durch die Abstandhalter erreicht wird.

Zweckmäßigerweise weist der Anschlussdeckel eine Wandung auf, welche das Ende des Elektrokleinstmotors an zumindest drei Stellen radial umgreift. Diese Wandung soll verhindern, dass der Anschlussdeckel radial nur über die Motorkontaktbereiche gehalten ist, welche mit Ausnahme der konkaven Form ähnlich gestaltet sind und in der gleichen Richtung vorgebogen sind, wie die Haltebereiche. Die Wandung dient zur radialen Zentrierung des Elektrokleinstmotors in Bezug auf den Anschlussdeckel. Der Anschlussdeckel wiederum wird über die Gehäuseanformungen in Bezug auf die Motoraufnahme zentriert.

Ein Ausführungsbeispiel der Erfindung wird nachfolgend anhand der Zeichnung näher erläutert. Es zeigen:
Fig. 1 einen Anschlussdeckel,
Fig. 2 ein zweiteiliges Leitblech als Bestandteil des Anschlussdeckels,
Fig. 3 eine zweite Ansicht des Anschlussdeckels,
Fig. 4 ein Gehäuse eines Stellantriebs,
Fig. 5 das Gehäuse mit eingebautem Elektrokleinstmotor,
Fig. 6 den Elektrokleinstmotor mit vormontiertem Anschlussdeckel als Baugruppe,
Fig. 7 die Baugruppe aus Fig. 6 im eingebauten Zustand im Gehäuse,
Fig. 8 eine vergrößerte Ansicht von Fig. 6,
Fig. 9 ein Untersetzungsgetriebe des Stellantriebs.

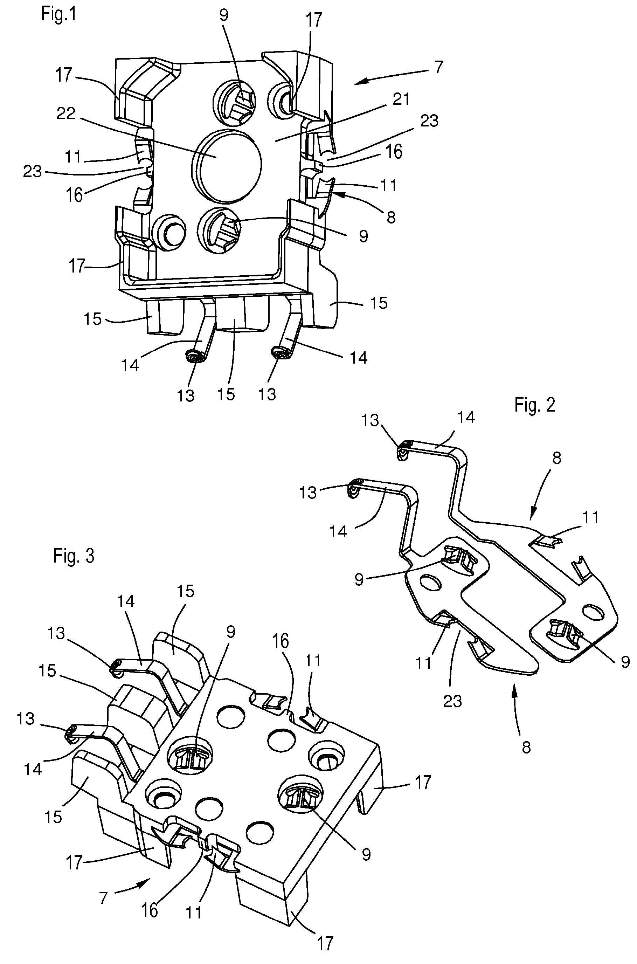

Fig. 1 zeigt einen Anschlussdeckel 7 in Form eines mit Kunststoffmaterial umspritzten Leitblechs 8. Der Anschlussdeckel 7 dient als Anschlusselement für einen Elektrokleinstmotor, welcher axial ausgerichtete Anschlussfahnen aufweist, die durch Motorkontaktbereiche 9 des Anschlussdeckels 7 kontaktierbar sind. Die Motorkontaktbereiche 9 sind in einem flächigen Bereich 21 des Anschlussdeckels 7 angeordnet, welcher zwischen den Motorkontaktbereichen 9 einen Rücksprung 22 aufweist, der als Freisparung für einen Lageransatz des Elektrokleinstmotors 6 dient. Der flächige Bereich 21 wird teilweise berandet durch eine mehrfach unterbrochene Wandung 17, welche als Zentriermittel für den Elektrokleinstmotor 6 ausgestaltet ist. Im gezeigten Beispiel besteht die Wandung 17 aus drei Teilbereichen, so dass der Elektrokleinstmotor 6 in alle radialen Richtungen gehalten wird. Die Höhe der Wandungen 17 ist begrenzt, um sich räumlich nicht mit einem Gehäuse eines Stellantriebs zu überschneiden. Das Leitblech 8 weist am Rand des Anschlussdeckels 7 Haltebereiche 11 auf, welche aus zwei einander gegenüberliegenden Blechlaschen bestehen, welche einen Zwischenraum 23 belassen, der zur Aufnahme von Gehäuseanformungen vorgesehen ist. Die Zwischenräume 23 auf beiden Seiten der Anschlussdeckels 7 sind rechtwinklig zu den Laschen durch Abstandhalter 16 begrenzt; diese dienen zur Führung und Zentrierung des Anschlussdeckels zum Gehäuse des Stellantriebs. Nach Außen sind die Zwischenräume 23 nicht zusätzlich begrenzt. Es wäre aber denkbar auch hier einen zusätzlichen Führungssteg vorzusehen. Das Leitblech 8 weist weiter Kontaktarme 14 auf, an deren Enden sich Kontakte 13 befinden, die als Anschlüsse für eine Kontaktfläche einer Leiterplatte dienen. Um die Kontaktarme insbesondere während des Fertigungsprozesses gegen Verformungen zu schützen, sind plattenartige Schutzeinrichtungen 15 beiderseits der Kontaktarme 14 mit dem Kunststoffmaterial des Anschlussdeckels 7 mitgeformt. Zwei Schutzeinrichtungen 15 sind an den Außenbereichen des Anschlussdeckels 7 angeordnet und eine Schutzeinrichtung 15 ist zwischen den Kontaktarmen ausgebildet.

Fig. 2 zeigt das Leitblech 8, das im Einbauzustand aus zwei galvanisch voneinander getrennten Teilblechen besteht. Vor dem Umspritzen sind beide Teilbleche durch Blechbrücken miteinander verbunden, die anschließend ausgestanzt oder aufgetrennt werden. Hier ist deutlich zu erkennen, dass die Motorkontaktbereiche 9 und die Haltebereiche 11 in der gleichen Blechebene liegen. Aus der Blechebene sind die Kontaktarme 14 mit den Kontakten 13 mehrfach abgewinkelt.

Fig. 3 zeigt den Anschlussdeckel 7 aus einer anderen Perspektive. Um die Motorkontaktbereiche 9 nutzbar zu machen, sind sie beim Umspritzen durch zylindrische Werkzeugstempel freigespart worden. Weiter sind dargestellt: die Kontaktarme 14 mit den Kontakten 13, die Schutzeinrichtung 15, die Wandung 17, die Haltebereiche 11 und die Abstandhalter 16.

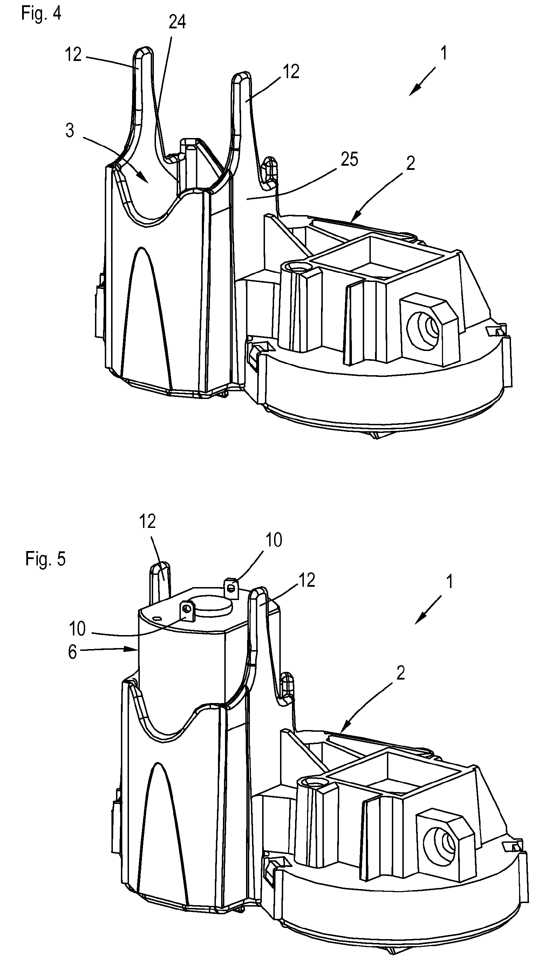

Fig. 4 zeigt das Gehäuse 2 des Stellantriebs 1, mit einer Motoraufnahme 3, die der Form eines abgeflachten Elektrokleinstmotors angepasst ist. Innerhalb der Motoraufnahme sind Schaberippen 24 vorgesehen, wodurch eine radial spielfreie Aufnahme des Elektrokleinstmotors erreicht wird. An eine Gehäusewandung 25 der Motoraufnahme 3 schließen zwei Gehäuseanformungen 12 an, die als mechanische Aufnahme für den Anschlussdeckel vorgesehen sind. Radial zur Motoraufnahme 3 schließt ein Gehäusebereich an, der eine Getriebeaufnahme bildet.

In Fig. 5 ist der Elektrokleinstmotor 6 ohne Anschlussdeckel in der Motoraufnahme des Gehäuses 2 eingelegt. Der Elektrokleinstmotor weist zwei axial vorspringende Anschlussfahnen 10 auf. Die Gehäuseanformungen 12 und die Anschlussfahnen 10 sind parallel zueinander ausgerichtet. Die Montagereihenfolge ist nicht zwingend vorgegeben. Es ist möglich, den Elektrokleinstmotor zuerst in die Motoraufnahme einzupressen und den Anschlussdeckel 7 anschließend zu montieren, oder zunächst eine Baugruppe aus Elektrokleinstmotor und Anschlussdeckel zu bilden, welche anschließend in das Gehäuse eingebaut wird.

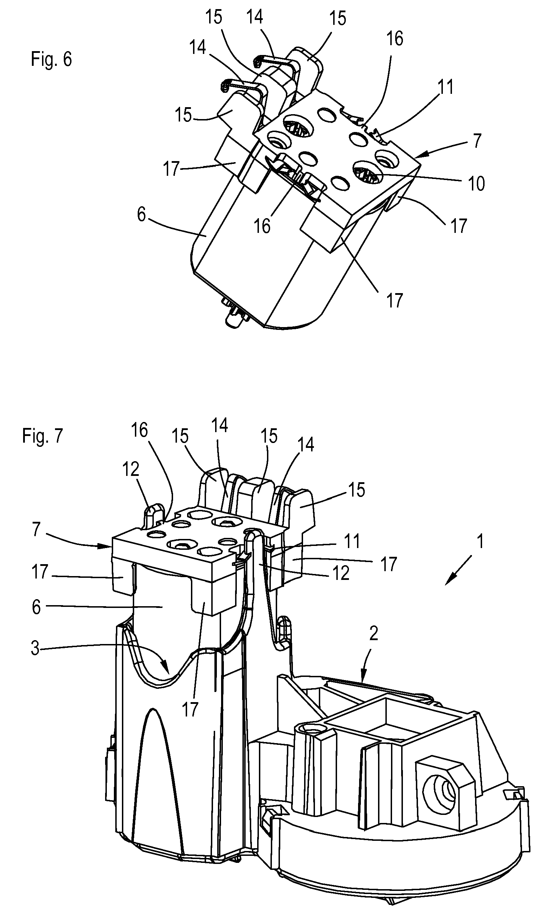

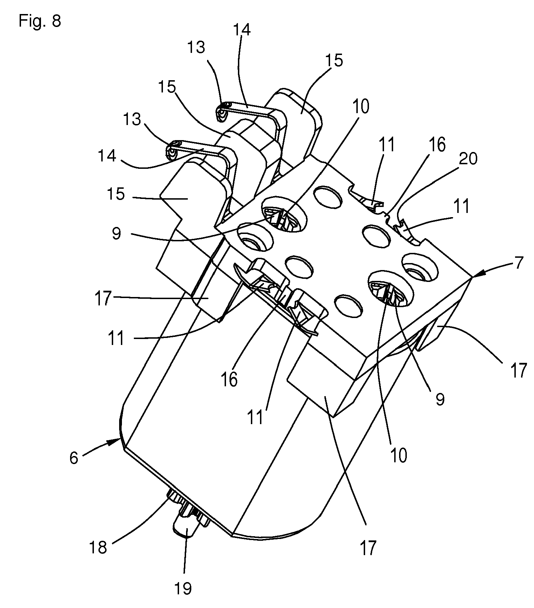

Fig. 6 und 8 zeigen eine derartige Baugruppe, die aus dem Elektrokleinstmotor 6 und dem Anschlussdeckel 7 besteht. Hier sind die Anschlussfahnen 10 des Elektrokleinstmotors 6 bereits mit den Motorkontaktbereichen 9 des Anschlussdeckels 7 verkrallt und damit in erster Linie elektrisch aber auch mechanisch verbunden. Weiter sind zu erkennen die Abstandhalter 16, die Wandung 17, die Schutzeinrichtung 15 und die Kontaktarme 14.

In Fig. 7 ist die Baugruppe aus den Figuren 6 und 8 über die Gehäuseanformungen 12 mit dem Gehäuse 2 mechanisch verbunden. Die Länge der Gehäuseanformungen 12 sind so ausgelegt, dass sie auch bei Verwendung eines Elektrokleinstmotors mit einer sich an der Toleranzobergrenze befindlichen Gehäuselänge, über den Anschlussdeckel vorspringen. Dadurch ist stets eine sichere mechanische Verbindung herstellbar. Die Gehäuseanformungen 12 nehmen den Zwischenraum ein, der teilweise von den Laschen des Haltebereichs 11 und rechtwinklig hierzu von dem zugeordneten Abstandhalter 16 definiert wird. Der Elektrokleinstmotor 6 wird radial auch durch die Wandung 17 des Anschlussdeckels 7 radial zentriert und gehalten. Weiter sind die Kontaktarme 14 und die Schutzeinrichtung 15 dargestellt.

Fig. 8 zeigt Fig. 6 in einer vergrößerten Darstellung. Hier ist zusätzlich eine konkave Auskehlung 20 an den Laschen des Haltebereichs 11 zu erkennen, welche dafür sorgen, dass die Gehäuseanformungen, welche eine dazu passende konvexe Gestalt aufweisen radial besser gehalten werden können. Damit diese zueinander passenden Formen sich leichter finden können, sind die Abstandhalter 16 vorgesehen. Diese weiten die einander leicht zugeneigten Gehäuseanformungen auf. Der Elektrokleinstmotor weist eine Motorwelle 19 mit einem darauf festsitzenden Ritzel 18 auf. Das Ritzel 18 ist mit einem Untersetzungsgetriebe getrieblich in Eingriff.

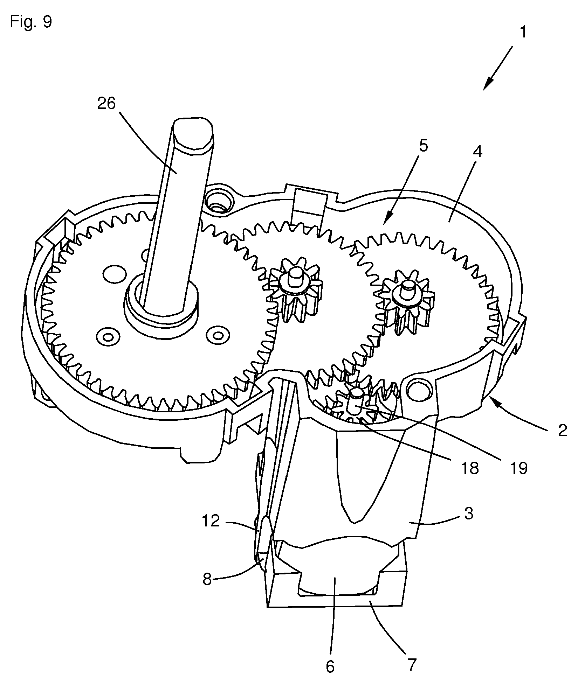

Fig. 9 zeigt die Getriebeaufnahme 4 des Gehäuses 2 des Stellantriebs 1, mit dem darin angeordneten Untersetzungsgetriebe 5, das hier von einem mehrstufigen Stirnradgetriebe gebildet wird. Weiter zu erkennen sind der Elektrokleinstmotor 6, der Anschlussdeckel 7, das Leitblech 8, die Gehäuseanformungen 12, die Motorwelle 19 und das mit dem Untersetzungsgetriebe getrieblich in Eingriff befindliche Ritzel 18. Die Endstufe des Getriebes bildet ein Spindelgetriebe mit einer gegenüber einem Zahnrad verdrehgesicherten Gewindespindel 26.

### Bezugszeichenliste

- 1: Stellantrieb
- 2: Gehäuse
- 3: Motoraufnahme
- 4: Getriebeaufnahme
- 5: Untersetzungsgetriebe
- 6: Elektrokleinstmotor
- 7: Anschlussdeckel
- 8: Leitblech
- 9: Motorkontaktbereich
- 10: Anschlussfahne
- 11: Haltebereich
- 12: Gehäuseanformung
- 13: Kontakt
- 14: Kontaktarm
- 15: Schutzeinrichtung
- 16: Abstandhalter
- 17: Wandung
- 18: Ritzel
- 19: Motorwelle
- 20: Auskehlung
- 21: flächiger Bereich
- 22: Rücksprung
- 23: Zwischenraum
- 24: Schaberippe
- 25: Gehäusewandung
- 26: Gewindespindel

## Patentansprüche

1. Stellantrieb (1) mit einem Gehäuse (2), das Aufnahmen (3, 4) für ein Untersetzungsgetriebe (5) und für einen Elektrokleinstmotor (6) umfasst, wobei die Motoraufnahme (3) mit einem Anschlussdeckel (7) verbunden ist, wobei der Anschlussdeckel (7) aus einem mit Kunststoffmaterial umspritzten Leitblech (8) besteht, das Motorkontaktbereiche (9) aufweist, die sich mit Anschlussfahnen (10) des Elektrokleinstmotors verkrallen, **dadurch gekennzeichnet, dass** das Leitblech (8) Haltebereiche (11) aufweist, die sich mit Gehäuseanformungen (12) des Gehäuses (2) verkrallen.

2. Stellantrieb nach Anspruch 1, **dadurch gekennzeichnet, dass** die Fügerichtung des Leitblechs (8) in Bezug auf die Anschlussfahnen (10) parallel zur Fügerichtung des Leitblechs (8) in Bezug auf die Gehäuseanformungen (12) ist.

3. Stellantrieb nach Anspruch 1 oder 2, **dadurch gekennzeichnet, dass** der Elektrokleinstmotor (6) mit Hilfe von Schaberippen (24) in der Aufnahme (3) des Gehäuses (2) zumindest radial fest gehalten ist.

4. Stellantrieb nach Anspruch 1, 2 oder 3, **dadurch gekennzeichnet, dass** die Gehäuseanformungen (12) in Form von schmalen Zungen an die Aufnahme (3) für den Elektrokleinstmotor anschließen und im montierten Zustand auch an der Toleranzobergrenze für die Gehäuselänge des Elektrokleinstmotors über den Anschlussdeckel (7) vorspringen, so dass der Elektrokleinstmotor (6) durch den Anschlussdeckel (7) über einen großen Toleranzbereich axial spielfrei in der Aufnahme (3) gehalten ist.

5. Stellantrieb nach Anspruch 1, 2, 3 oder 4, **dadurch gekennzeichnet, dass** das Leitblech (8) mit Kontakten (13) zur Verbindung mit einer Elektronik und/oder einer Spannungsversorgung einstückig ist.

6. Stellantrieb nach Anspruch 5, **dadurch gekennzeichnet, dass** die Kontakte (13) in Form von federnden Kontaktarmen (14) ausgebildet sind.

7. Stellantrieb nach zumindest einem der vorangehenden Ansprüche, **dadurch gekennzeichnet, dass** das Kunststoffmaterial, das um das Leitblech (8) gespritzt ist, Schutzeinrichtungen (15) umfasst, welche beiderseits der Kontaktarme (14) angeordnet sind.

8. Stellantrieb nach zumindest einem der vorangehenden Ansprüche, **dadurch gekennzeichnet, dass** der Anschlussdeckel (7) nahe der Haltebereiche (11) Abstandhalter (16) in Form von Vorsprüngen aufweist.

9. Stellantrieb nach zumindest einem der vorangehenden Ansprüche, **dadurch gekennzeichnet, dass** der Anschlussdeckel (7) eine Wandung (17) aufweist, welche das Ende des Elektrokleinstmotors (6) an zumindest drei Stellen radial umgreift.

## Claims

1. An actuator (1) with a housing (2) which comprises receptacles (3, 4) for a step-down gear (5) and for a miniature electric motor (6), wherein the motor receptacle (3) is connected to a connection cover (7), wherein the connection cover (7) consists of a conductive plate (8) which is encapsulated with plastics material and has motor contact regions (9) which interlock with connecting lugs (10) of the miniature electric motor, **characterised in that** the conductive plate (8) has holding regions (11) which interlock with formed-on housing portions (12) of the housing (2).

2. An actuator according to Claim 1, **characterised in that** the direction of assembly of the conductive plate (8) relative to the connecting lugs (10) is parallel to the direction of assembly of the conductive plate (8) relative to the formed-on housing portions (12).

3. An actuator according to Claim 1 or 2, **characterised in that** the miniature electric motor (6) is held firmly at least radially in the receptacle (3) of the housing (2) with the aid of scraping ribs (24).

4. An actuator according to Claim 1, 2 or 3, **characterised in that** the formed-on housing portions (12) adjoin the receptacle (3) for the miniature electric motor in the form of narrow tongues and in the mounted state project over the connection cover (7), even at the upper tolerance limit for the housing length of the miniature electric motor, so that the miniature electric motor (6) is held axially without play in the receptacle (3) by the connection cover (7) over a wide tolerance range.

5. An actuator according to Claim 1, 2, 3 or 4, **characterised in that** the conductive plate (8) is in one piece with contacts (13) for connecting to electronics and/or to a voltage supply.

6. An actuator according to Claim 5, **characterised in that** the contacts (13) are in the form of resilient contact arms (14).

7. An actuator according to at least one of the preceding claims, **characterised in that** the plastics material which encapsulates the conductive plate (8) comprises protection means (15) which are arranged on both sides of the contact arms (14).

8. An actuator according to at least one of the preceding claims, **characterised in that** the connection cover (7) close to the holding regions (11) has spacers (16) in the form of projections.

9. An actuator according to at least one of the preceding claims, **characterised in that** the connection cover (7) has a wall (17) which radially engages around the end of the miniature electric motor (6) at at least three points.

## Revendications

1. Entraînement de déplacement de réglage (1) comprenant un carter (2), qui comprend des logements d'accueil (3, 4) pour un réducteur (5) et pour un moteur électrique miniature ou micromoteur électrique (6), le logement d'accueil de moteur (3) étant relié à un couvercle de raccordement (7), et le couvercle de raccordement (7) étant réalisé en une tôle conductrice (8) surmoulée par injection à l'aide d'une matière plastique et présentant des zones de contact moteur (9), qui viennent s'agripper à des fiches de connexion ou de raccordement (10) du moteur miniature,
**caractérisé en ce que** la tôle conductrice (8) présente des zones de maintien (11) qui viennent s'agripper sur des appendices de moulage de carter (12) du carter (2).

2. Entraînement de déplacement de réglage selon la revendication 1, **caractérisé en ce que** la direction d'assemblage de la tôle conductrice (8) par rapport aux fiches de connexion (10) est parallèle à la direction d'assemblage de la tôle conductrice (8) par rapport aux appendices de moulage de carter (12).

3. Entraînement de déplacement de réglage selon la revendication 1 ou la revendication 2, **caractérisé en ce que** le moteur électrique miniature (6) est maintenu de manière fixe au moins radialement à l'aide de nervures de raclage (24), dans le logement d'accueil (3) du carter (2).

4. Entraînement de déplacement de réglage selon la revendication 1, 2 ou la revendication 3, **caractérisé en ce que** les appendices de moulage de carter (12), sous la forme de languettes étroites, se raccordent au logement d'accueil (3) pour le moteur électrique miniature, et, dans l'état monté, dépassent également pour la limite supérieure de tolérance concernant la longueur de carter du moteur électrique miniature, au-dessus du couvercle de raccordement (7), de sorte que le moteur électrique miniature (6) est maintenu axialement sans jeu dans le logement d'accueil (3) sur une grande plage de tolérance, par le couvercle de raccordement (7).

5. Entraînement de déplacement de réglage selon la revendication 1, 2, 3 ou la revendication 4, **caractérisé en ce que** la tôle conductrice (8) est réalisée d'un seul tenant avec des contacts (13) pour la liaison de connexion avec une électronique et/ou une alimentation en tension.

6. Entraînement de déplacement de réglage selon la revendication 5, **caractérisé en ce que** les contacts (13) sont réalisés sous la forme de bras de contact élastiques (14).

7. Entraînement de déplacement de réglage selon l'une au moins des revendications précédentes, **caractérisé en ce que** la matière plastique, qui est moulée par injection autour de la tôle conductrice (8), comporte des dispositifs de protection (15) agencés de part et d'autre des bras de contact (14).

8. Entraînement de déplacement de réglage selon l'une au moins des revendications précédentes, **caractérisé en ce que** le couvercle de raccordement (7) présente, au voisinage des zones de maintien (11), des entretoises d'espacement (16) sous la forme de protubérances.

9. Entraînement de déplacement de réglage selon l'une au moins des revendications précédentes, **caractérisé en ce que** le couvercle de raccordement (7) présente une paroi (17), qui entoure radialement l'extrémité du moteur électrique miniature (6) au niveau d'au moins trois zones.
